# EUROPEAN PATENT APPLICATION

(11) **EP 4 841 554 A1**
(43) Date of publication of application: **18.11.2026**
(21) Application number: 25177005.3
(22) Date of filing: 16.05.2025
(51) Int. Cl.: G06T 5/60

(54) **GENERATING VIRTUALLY EXPANDED MICROSCOPY IMAGES USING MACHINE LEARNING IN LIVING CELL LIGHT MICROSCOPY**

(71) Applicant: Universität Heidelberg, 69117 Heidelberg (DE)
(72) Inventor: Venkataramani, Varun, 69121 Heidelberg (DE); Reyhan, Ekin, 69117 Heidelberg (DE)
(74) Representative: Richardt Patentanwälte PartG mbB

(57) **Abstract**

Disclosed is an image analysis system comprising:
- at least one processor configured for:
• receiving (102) expansion microscopy, ExM, images acquired from expanded biological ex vivo samples;
• computationally converting (104) the received ExM images into virtual non-expansion microscopy, NExM, images depicting virtual living cell versions of the expanded ex vivo samples;
• creating (106) a training data set comprising pairs of the ExM images and respective virtual NExM images;
• training (108) a machine-learning model so that the model learns to transform a NExM image into an ExM image;
• receiving (202) a further NExM image of a further living cell sample;
• applying (204) the trained model on the further NExM image to generate an ExM image depicting a virtual, expanded ex vivo version of the further biological living cell sample; and

- an interface configured for outputting (206) the generated ExM image for use in living cell light microscopy imaging.

## Description

### FIELD OF THE INVENTION

The invention relates to the field of light microscopy, and more particular to the field of living cell light microscopy imaging. This field covers in vivo light microscopy imaging and in vitro light microscopy imaging of living cells.

### BACKGROUND

Living cell light microscopy, in particular two-photon microscopy, has emerged as an essential tool in biological research for the dynamic visualization of living tissues. Its ability to capture real-time changes within cellular environments under physiological conditions makes it indispensable for studies in neuroscience, oncology, and developmental biology. Despite these advantages, the diffraction limit of light imposes a significant constraint on the spatial resolution, which hinders the observation of fine subcellular details such as dendritic spines, tumor microtubes, and other critical cellular structures.

Efforts to overcome these limitations have led to several different approaches. Content-aware image restoration methods, for example, rely on sophisticated approaches to align different images showing the same sample. However, these methods are inherently dependent on the availability of accurately registered image pairs. The meticulous acquisition and registration of such datasets present substantial challenges, including pronounced registration errors, ultimately limiting the reliability and scalability of these approaches.

Expansion microscopy represents another image acquisition technique that relies on physically enlarging biological samples, thereby enabling super-resolution imaging with conventional microscopes. While expansion microscopy significantly improves spatial resolution, its practical application is primarily limited to ex vivo studies. Expansion microscopy cannot be used for dynamic, live-tissue studies.

The invention disclosed herein seeks to address at least some of the limitations of the currently available in living cell image acquisition and analysis techniques.

### SUMMARY OF THE INVENTION

It is an objective to provide for a system and method for living cell light microscopy imaging. The objectives underlying the invention are solved by the features of the independent claims.

In one aspect an image analysis system for living cell light microscopy imaging is disclosed. The system comprises at least one processor configured for:
- receiving expansion microscopy, ExM, images acquired from expanded biological ex vivo samples;
- computationally converting the received ExM images into virtual non-expansion microscopy, NExM, images depicting virtual living cell versions of the expanded ex vivo samples, wherein the virtual NExM images have a resolution that is lower than that of the ExM images;
- creating a training data set comprising image pairs, each pair including one of the ExM images and the respectively converted virtual NExM image;
- training a machine-learning model using the image pairs so that the model learns to transform a NExM image depicting a biological living cell sample into an ExM image depicting a virtual expanded ex vivo version of the biological living cell sample;
- receiving a further NExM image of a further biological living cell sample; and
- applying the trained model on the further NExM image to generate an ExM image depicting a virtual, expanded ex vivo version of the further biological living cell sample.

The system further comprises an interface configured for outputting the generated ExM image for use in living cell light microscopy imaging.

In a further aspect, disclosed herein is an image analysis method for living cell light microscopy imaging. The method comprises:
- providing a trained machine-learning model, the trained model being adapted to receive a NExM image depicting a biological living cell sample, and in response to output an ExM image depicting a virtual expanded ex vivo version of the biological living cell sample, wherein the NExM image has a resolution that is lower than that of the ExM image;
- receiving a further NExM image of a further biological living cell sample;
- applying the trained model on the further NExM image to generate an ExM image depicting a virtual, expanded ex vivo version of the further biological living cell sample; and
- outputting the generated ExM image.

In a further aspect, disclosed herein is an image analysis method for living cell light microscopy imaging. The method comprises:
- receiving expansion microscopy, ExM, images acquired from expanded biological ex vivo samples;
- computationally converting the received ExM images into virtual non-expansion microscopy, NExM, images depicting virtual living cell versions of the expanded ex vivo samples, wherein the virtual NExM images have a resolution that is lower than that of the ExM images;
- creating a training data set comprising image pairs, each pair including one of the ExM images and the respectively converted virtual NExM image;
- training a machine-learning model using the image pairs so that the model learns to transform a NExM image depicting a biological living cell sample into a ExM image depicting a virtual expanded ex vivo version of the biological living cell sample; and
- outputting the trained model for use in living cell light microscopy imaging.

In a further aspect, disclosed herein is an image analysis system for living cell light microscopy imaging. The system comprises at least one processor configured for:
- providing a trained machine-learning model, the trained model being adapted to receive a NExM image depicting a biological living cell sample, and in response to output an ExM image depicting a virtual expanded ex vivo version of the biological living cell sample, wherein the NExM image has a resolution that is lower than that of the ExM image;
- receiving a further NExM image of a further biological living cell sample; and
- applying the trained model on the further NExM image to generate an ExM image depicting a virtual, expanded ex vivo version of the further biological living cell sample.

The system further comprises an interface configured for outputting the generated ExM image for use in living cell light microscopy imaging.

The above-mentioned features may have the advantage of leveraging, in the training phase, high-resolution ex vivo expansion microscopy data to generate synthetic training datasets that accurately mimic living cell imaging conditions and living cell images. By using synthetic data generation and, according to some examples, advanced machine learning-particularly deep learning models integrated with uncertainty assessment tools such as variational autoencoders-embodiments of the invention may bypass the need for labor-intensive correlative data acquisition and registration. This innovative approach may allow to generate high-resolution images of living tissues, thereby enhancing the capacity to observe and analyze dynamic subcellular processes, according to some examples even in real time, while preserving the inherent advantages of living cell imaging.

It is understood that one or more of the examples disclosed herein may be combined as long as the combined examples are not mutually exclusive.

### BRIEF DESCRIPTION OF THE DRAWINGS

In the following, examples are described in greater detail making reference to the drawings in which:
Fig. 1 is a flow chart of an image analysis method related to the training phase of a machine learning model,
Fig. 2 is a flow chart of an image analysis method related to the test/application phase of a machine learning model,
Fig. 3 is a block diagram of an image analysis system configured for executing the training phase of a machine learning model,
Fig. 4 is a block diagram of an image analysis system configured for executing the test/application phase of a machine learning model,
Fig. 5 shows images illustrating the effect of applying a Gaussian noise function,
Fig. 6 shows a comparison of the quality and resolution of the images obtainable via digital (or virtual) expansion microscopy with other image restoration methodologies,
Figs. 7 A-C illustrate various aspects of a workflow for using digital expansion microscopy for examining glioma cells in vivo.

### DETAILED DESCRIPTION

According to some examples, the image analysis methods and systems described herein, and the trained model and/or the images output by the trained model may be used for assisting a person or a software for generating a diagnosis for a human or non-human patient, or for identifying or optimizing a treatment plan. The treatment may be a prophylactic or therapeutic treatment. In some cases, the treatment may encompass the administration of one or more medicaments, or physiotherapy, or surgery or other form of treatment.

The machine-learning model can be, for example, a deep learning model, in particular a deep learning model comprising a neural network. The neural network can be, for example, a convolutional neural network, CNN.

This could have the advantage that robust feature extraction might be achieved, as neural networks, in particular convolutional neural networks, are capable of identifying and learning to correlate patterns in the NExM and ExM images. Complex spatial correlations not visible to the human eye may be recognized and learned.

According to some examples, the image analysis method further comprises:
- assessing the reliability of the properties of the generated ExM image using a neural network, in particular, a Variational Autoencoder, VAE; and
- outputting an indication of the assessed reliability, in particular in the form of a heatmap of the ExM image generated by the trained model, the heatmap encoding the assessed reliability.

This could have the advantage that improved reliability assessment might be achieved, as integration of the Variational Autoencoder or other types of networks that are able to assess the reliability of the properties of the generated ExM image might allow providing uncertainty maps and other types of graphical or non-graphical representations of regions of lower confidence. The assessment of the reliabilities might in addition allow a user to perform a more informed interpretation of the generated images. This may be achieved through the provision of a quantified measure of reliability, thus aiding subsequent analysis, e.g. an analysis for finding a diagnosis or a suitable treatment plan.

In an example, the image analysis method further comprises training an untrained model to provide the trained model, wherein the training is performed on a training data set comprising pairs of ExM images and NExM images, the ExM images of the training data set having been acquired from expanded biological ex vivo samples. The NExM image of each image pair is a virtual image being the result of a computational conversion of the ExM image of the image pair into the NExM image.

This could have the advantage that reliance on laborious, precisely matched correlative image data, which nevertheless will often comprise erroneous alignments, may be avoided, thereby overcoming registration challenges inherent in conventional approaches.

In a further example, the conversion comprises reducing the resolution, in particular by at least a 2-fold reduction, and more particularly within a range of a 2-fold to 20-fold reduction.

This could have the advantage that controlled resolution reduction might be achieved by methodically downscaling images, ensuring that critical structural details are preserved. In addition, a resolution reduction may improve and facilitate the mimicking of living cell imaging condition and image artifacts in the virtual living cell NExM images.

According to examples, the conversion comprises introducing noise patterns mimicking living cell imaging conditions and/or artifacts.

This might have the advantage that more realistic simulation of living cell conditions might be achieved by incorporating empirically determined noise patterns, thereby enhancing the authenticity of the synthetic part of the training data. In addition, the robustness of the machine-learning model may be improved, as the noise adaptation would promote better generalization to variable imaging scenarios. In addition, when the noise introduced in the synthetic data closely mimics real-world conditions, the model may converge faster during training by focusing on learning the true underlying image transformations rather than compensating for unrealistic noise.

According to some examples, the noise pattern mimicking the living cell imaging conditions comprises a Gaussian noise with a standard deviation determined empirically to best match empirically acquired living cell NExM images, or comprises a noise profile generated by modeling the noise profile of the microscope used for acquiring the living cell NExM images.

A model trained on data with empirically adjusted noise is more likely to accurately reconstruct fine structural details and critical features, thereby reducing potential artifacts and enhancing the fidelity of the restored ExM images. By replicating the exact noise profile observed in real living cell imaging conditions, the synthetic images become more representative of the actual imaging environment, leading the neural network to learn a more accurate mapping from low-resolution to high-resolution images. Furthermore, using the above-mentioned noise generation approaches may allow generating noise levels which minimize the discrepancy (domain gap) between the synthetically generated part of the training data and the real ex vivo ExM images, which can improve the robustness and generalization of the machine-learning model when it is applied to new, unseen data.

According to examples, the NExM images of the image pairs are images selected from a group comprising:
- two-photon-microscopy images; or
- single-photon-microscopy images; or
- three-photon-microscopy images; or
- Light-Sheet Fluorescence Microscopy (LSFM) images; or
- Confocal Laser Scanning Microscopy (CLSM).

In an example, the received further NExM image is an image acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM). In addition, the ExM image generated by the trained model is a virtual image computationally reproducing an image acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM).

According to some examples, the transformation techniques for two or more of the above-mentioned different NExM image types and respective acquisition techniques are integrated in the same transformation software. This could have the advantage that enhanced compatibility among different imaging modalities and respective image acquisition techniques might be achieved, ensuring that the virtual ExM images adequately represent diverse acquisition techniques.

According to some examples, the ExM images of the image pairs are images acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM). The NExM images of the image pairs are images computationally reproducing an image acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM).

Hence, the image analysis method and system described herein may be applied for many different types of image acquisition techniques, thereby broadening the application spectrum. Preferably, the image acquisition technique for the virtual living cell images that is simulated/computed in the training phase is the same image acquisition technique used in the test phase for acquiring the further NExM image of the further living cell sample. Likewise, the further ExM image output in the test phase by the trained model preferably looks as if it would have been generated using the image acquisition technique used in the training phase for acquiring the ExM images.

In an example, the NExM images used for training the model and/or the received further NExM image have a spatial resolution of approximately 0.1 µm to 1.0 µm in the lateral and axial dimensions. In this context, spatial resolution refers to the ability to identify two structures approximately 100-1000 nm apart from each other as distinct peaks in an intensity distribution plot and/or directly in the respective image of the biological sample.

This could have the advantage that this resolution limit may represent the limits of the NExM image acquisition technology simulated/virtually created at training phase and used in the real world at test phase to generate the further NExM image. Hence, embodiments may allow to bypass the physical constraints concerning the resolution of current day living cell image acquisition technologies.

In an example, the receiving of the further NExM image of the further biological living cell sample comprises receiving a stream of continuously acquired NExM images of the further biological living cell sample. The trained model is continuously applied on the stream of the NExM images to generate a stream of ExM images of the further biological sample in real-time. The outputting of the virtual ExM image comprises outputting the stream of virtual ExM images in real-time.

This could have the advantage that real-time microscopy software may be provided which allows a user watching an living cell biological sample via a conventional NExM image acquisition technique, whereby an effective image resolution is provided computationally by the software that is similar to the resolution achieved by ExM techniques. The software may achieve this by continuously processing a stream of NExM images, thereby enabling immediate visualization of dynamic biological events at very high resolution which was not yet achievable for living cell samples with the available techniques. The uninterrupted output of virtual ExM images would allow for live, high-throughput imaging.

In a further aspect, a method for inspecting a biological living cell sample is described herein. The method comprises applying a staining protocol on the further biological living cell sample, wherein the received further NExM image of the further biological sample depicts the stained further biological living cell sample. For example, the staining may be a H&E staining or any other form of staining that may ensure that at least some parts of the biological sample appear opaque rather than transparent and allow to distinguish these parts from the rest of the tissue; performing the method in the test phase according to any one of the embodiments and examples described herein for converting the received further NExM image into the further ExM image and for outputting the further ExM image.

In some cases, improved diagnostic accuracy might be achieved by combining enhanced staining contrast with advanced image transformation techniques, thereby enabling more precise inspection of cellular structures. The integration of staining protocols with the image conversion method might facilitate detailed identification of pathological features.

In a further aspect, disclosed herein is a method for providing a trained image conversion model for use in living cell light microscopy imaging. The method comprises:
- applying a tissue expansion protocol on one or more biological ex vivo samples; and applying a staining protocol on the biological ex vivo samples,
- receiving expansion microscopy, ExM, images depicting the one or more expanded biological ex vivo samples;
- performing a method for providing a training data set and for training a machine-learning model on the training data set as described herein for examples of the invention for providing the trained model, whereby the received ExM images are used for providing the training data set.

In some examples, the output trained model is deployed automatically. This might accelerate the integration of the trained model and its advanced image generation capabilities.

Living cell microscopy, in particular in vivo two-photon microscopy, has become an essential method in biological research since its introduction, with widespread applications in neuroscience, oncology and immunology. Two-photon microscopy is able to image at a high spatial and temporal resolution while allowing deeper penetration than one-photon confocal microscopy made this methodology suitable for performing structural and functional imaging in living tissue. In the case of neuroscience, this technology has been utilized for functional characterization of neurons or brain tumor cells via calcium imaging and investigation of dendritic spine plasticity under physiological and pathological tumor conditions. However, the diffraction limit of light imposes a fundamental constraint on the resolution of this approach, preventing detailed visualization of subcellular structures smaller than 1 µm, and in particular, smaller than 500 nm, in vivo. Typically, the optical resolution limit of a two-photon microscope is determined by the diffraction limit of light and depends on the objective and laser wavelength used. This limitation hinders our understanding of their contribution to key processes such as tumor progression and therapeutic responses. Addressing these limitations requires novel methodologies capable of enhancing resolution without increasing phototoxicity.

Expansion microscopy may offer accessible super-resolution imaging using conventional microscopes by physically enlarging samples, e.g. by the factor in the range of 2-20, e.g., 2-10. However, this is limited to ex vivo studies. The direct combination of ex vivo expansion microscopy with living cell microscopy to investigate specific cells of interest requires laborious correlative approaches, which often fail due to significant morphological changes introduced during the expansion and for other reasons.

To overcome these limitations, a software and/or system configured for combining living cell microscopy, in particular two photon microscopy, and ex vivo expansion microscopy, in particular ex vivo two photon expansion microscopy, to synthetically generated training datasets and a trained machine learning model is provided.

In the following, similar elements are denoted by the same reference numerals.

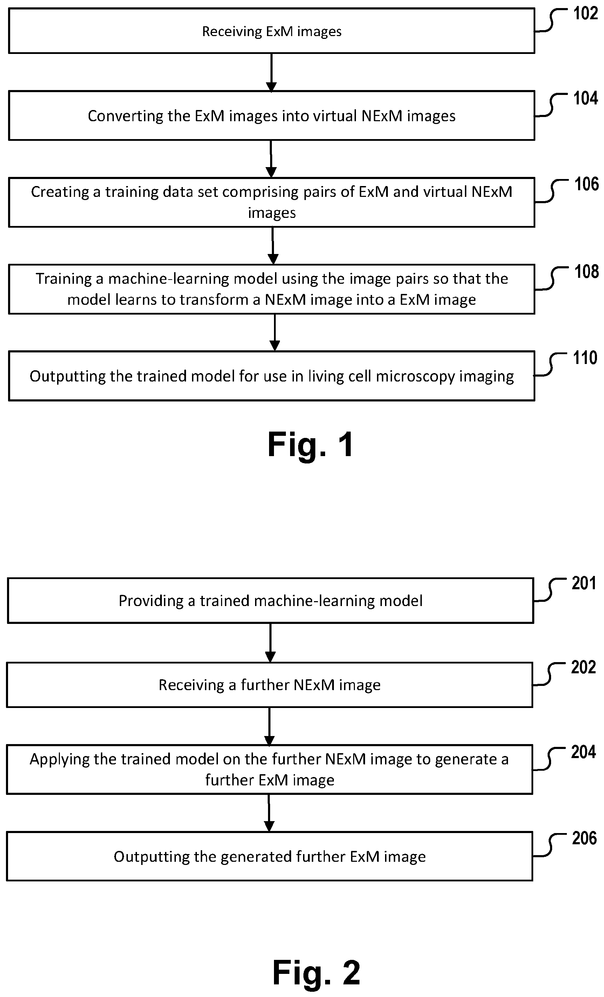

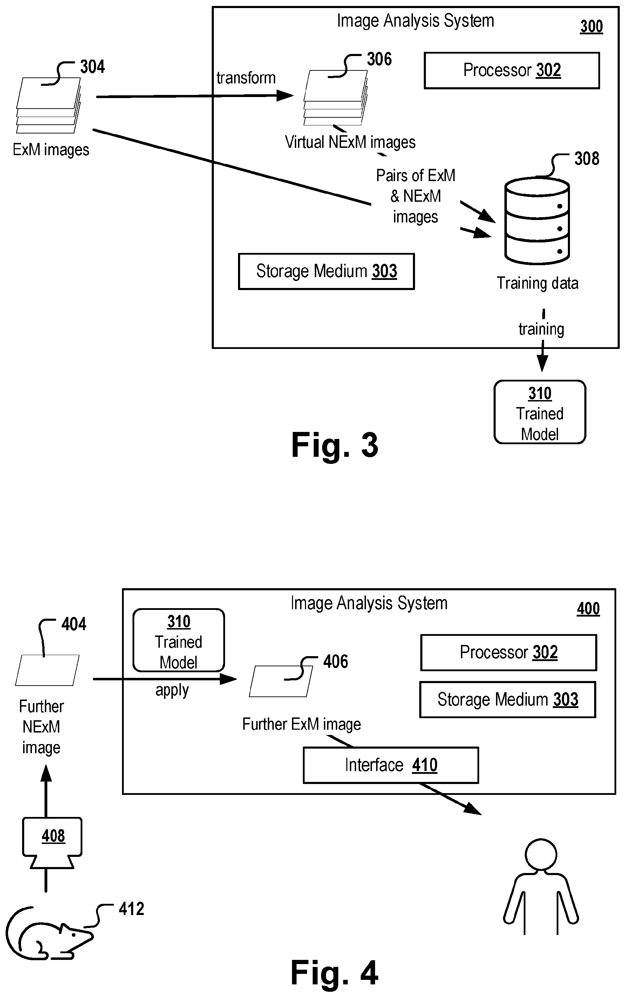

Figure 1 shows a flow chart of an image analysis method related to the training phase of a machine learning model. Figure 1 will be described making reference to figure 3, which shows a block diagram of an image analysis system 300 configured for executing the training phase of a machine learning model, e.g., the method illustrated in figure 1. The system 300 comprises one or more processors 302 and a volatile or non-volatile storage medium 303. The storage medium comprises constructions which, when executed by the processor 302, causes the processor to execute the method as illustrated, for example in figure 1. The system 300 may further comprise an interface for receiving ExM images 304 from a network, from a database, from a storage medium or directly from an image acquisition system. The system may comprise a software module for transforming the received ExM images 304 into virtual NExM images, a further software module for creating pairs of corresponding ExM and NExM images and for storing these pairs as the training data set, e.g., in a database 308. The system may comprise a further software module for training a machine-learning model on the training data to provide a trained machine-learning model 310.

Figures 1 and 3 illustrate the process of converting acquired ExM images into virtual NExM images and the subsequent creation of synthetic training data 308 during the training phase.

In a first step 102, the system 300 receives expansion microscopy, ExM, images 304 acquired from expanded biological ex vivo samples. For example, the images 304 may be received directly from a microscope or from a network or data storage medium. The images 304 may be high-resolution ExM images, e.g. of a two-photon microscope, depicting different biological samples having been subjected to a tissue expansion protocol. For example, the images 304 may be high-resolution 4×-expansion microscopy (ExM) images acquired from expanded biological ex vivo samples. These images serve as the ground truth for the training process.

According to one example, the ExM images may be created as follows: ex vivo tissue or fixed co-cultures of rat or mouse cortical and iPSC co-cultures with human glioblastoma cells are used. Immunohistochemistry is performed to stain against GFP and a target molecule of interest, e.g., nestin. In general, endogenous fluorescence is expected to be quenched after expansion. Following immunohistochemistry, coverslips are anchored in 0.1 mg/ml Acryloyl-X SE (AcX) solution in 1x PBS overnight at room temperature. AcX stock solution was 10 mg/ml AcX solved in DMSO. Coverslips are then incubated for 2 hours at 37° C in custom chambers in 100 µl of the gelation solution consisting of 470 µl monomer stock solution for 4xM (8.08 % (wt), 2.66% (wt) acrylamide, 0.16% (wt) cross-linker, 1.9M NaCl (5M stock), 10.6% (v/v) 10X PBS, 5.3% (v/v) double-distilled water mixed with 10 µl each of 0.5 wt% 4-HT, 10 wt% TEMED and 10 wt% APS. Incubation chambers are prepared. For example, microscope slides and spacers made from No. 0 coverslips may be used. After incubation, gels are recovered and digested, e.g., in 8 U/ml Protein-K buffer overnight at room temperature. The gels are then washed twice for 30 minutes each with 1X PBS. The gels are then expanded by washing with MilliQ water 3x 10 min followed by 1x 30 min at room temperature. Expanded gels can then be mounted on and imaged in poly-L-lysin coated glass bottom dishes. This protocol corresponds to a 4x expansion of the tissue or in vitro cultures.

Images are then taken from the expanded samples, e.g., via a two-photon microscope. Only gels with an expansion factor of 3.9-4.1 may be included.

Next in step 104, the received images 304 are computationally converted (or transformed) into virtual non-expansion microscopy images (NExM images) 306. For example, the conversion may be performed by a software program, a software module or a program script, e.g. an ImageJ script. This conversion step adapts the high-resolution data to mimic the lower resolution observed in living cell imaging. The conversion preferably comprises a step of downscaling the received ExM images to simulate the lower resolution found in living cell (two-photon) microscopy images. For example, the ExM images can be downscaled in each axis (fourfold in this case), preferably such that the expansion introduced by the expansion protocol is compensated for. In addition, the conversion may comprise applying a Gaussian noise generation function - preferably with a standard deviation determined empirically to best match the noise characteristics of real living cell NExM images- to the downscaled images. The downscaled NExM images are then upscaled back to the original dimensions to yield virtual non-expansion microscopy (NExM) images 306 preferably having the same number of pixels in each dimension as the ExM image from which it was derived. However, due to the information loss during the downscaling and the optional addition of noise, the upscaled virtual NExM images still have a poorer resolution (in terms of tissue structures they can resolve, not in terms of pixel per area of the biological sample depicted). The NExM images 306 depict virtual living cell versions of the expanded ex vivo samples, wherein the virtual NExM images have a resolution - in terms of structures that are resolved - that is lower than that of the ExM images. The number of pixels of the ExM image and the virtual NExM image in each pair of the training data set is preferably identical in each image dimension. This may ensure that the alignment of the ExM image and its corresponding virtual NExM image is perfect, thereby avoiding all the alignment errors which occur when real images acquired from the same sample before and after it was expanded are aligned.

For the downscaling of the ExM images, for example the Area Averaging or Bicubic Interpolation or other algorithms which achieve a downscaling effect may be used. For the upscaling the downscaled virtual NExM images, bicubic interpolation and Lanczos resampling or other upscaling algorithms may be used.

The term "image resolution" or "resolution" in this context is defined as the minimum distance at which two adjacent structures can be distinctly identified as separate entities. This definition emphasizes the capability of an imaging system to discriminate between two features, rather than merely representing them with a given number of pixels. For instance, under a specific resolution limit, two closely spaced subcellular structures will be recognized as independent if their centers are separated by at least this minimum distance-often determined by optical criteria such as the Rayleigh criterion-regardless of how many pixels are used to display each structure. In this sense, the virtual NExM images have a lower resolution than the respective ExM images in the training data set.

Following conversion, the method comprises creating 106 a training data set 308. The training data set comprises image pairs, wherein each pair includes one of the ExM images and the respectively converted virtual NExM image. In other words, the pairs are created by pairing each ExM image with its corresponding virtual NExM image. These paired images form the basis for training a deep learning model, and may be stored in a database or other form of local or remote storage. Thanks to the downscaling and upscaling after the Gaussian noise was applied, perfectly matched training pairs may be obtained, which would not be possible in approaches which try to align pre-expansion and post-expansion tissue images because of unavoidable morphological changes in the tissue induced by the expansion process. In the training data set, the ExM images 304 act as high-resolution targets and the synthetic NExM images 306 as low-resolution inputs, thereby circumventing complex correlative registration challenges

Next in step 108, a machine-learning model is trained using the image pairs of the training data 308 so that the model learns to transform a NExM image depicting a biological living cell sample into an ExM image depicting a virtual expanded ex vivo version of the biological living cell sample. For example, a deep learning model-in particular a neural network, e.g., a convolutional neural network (CNN) such as U-Net is trained on the training data 308. In the training, the model may to learn the transformation mapping from NExM to ExM images. As the high-resolution features are perfectly matched to respective virtual NExM images in the training image pairs, the achieved accuracy of the resulting trained model may typically be very high.

Finally, the trained model 310 is output in step 110 for subsequent use in live imaging scenarios. For example, the trained model may be automatically deployed to a server or another computer or as part of the firmware or software used to operate a microscope or to process the images received from a microscope. The trained model may be stored on a data storage device or sent via a network to a computer system 400 or a user or software application.

Optionally, the trained model may be validated and/or further optimized. For example, real pre-expansion and post-expansion images of the same biological sample before and after tissue expansion that were not part of the training set may be used to verify the trained model's performance.

In some examples, a further machine-learning algorithm, preferably a neural network, in particular a variational autoencoder (VAE), is integrated in the training process to provide an assessment of model reliability already during the training. This additional machine-learning algorithm, e.g., the VAE, generates uncertainty maps that help identify potentially unreliable regions in the ExM images created by the model as a result of the training, thereby serving as a robust quality control mechanism for the training phase. In addition, or alternatively, the additional machine-learning algorithm, e.g. the VAE, may be used at test phase to provide a quality control mechanism and to indicate how reliable individual parts of the ExM images generated by the trained model are. Hence, the software used at test time for creating further ExM images from the further NExM images may comprise the trained model 310 and in addition the further machine learning model configured to compute quality information, e.g., a heat map, with respect to the ExM image output by the trained model 310.

In some examples, an evaluation workflow is performed on the trained model to assess its reliability. The evaluation workflow may comprise the following steps:

In order to perform the evaluation, a reliability assessment module may be integrated. This may be performed already during the training phase, e.g. by integrating the abovementioned further neural network, preferably a variational autoencoder (VAE) alongside the primary deep learning model into the software that applies the trained model on further NExM images. The further neural network is configured to capture the probability distribution of the training data's features and to generate uncertainty estimates for the model's outputs.

After the training of the further network, the further network can be used to process and evaluate the ExM images output by the trained model at test time. For this purpose, the further neural network computes pixel- or region-based uncertainty levels and may in addition create heatmaps that visually encode areas of high and low confidence.

In addition, in some examples, the reliability of even the further neural network can be tested by introducing controlled disruptions-for example, creating a mirrored version of a NExM image. Both the original and the mirrored NExM images are provided as input to the trained model 310 and the respectively obtained output ExM images are evaluated by the further model to test if the further network identifies inconsistencies between the image transformation processes of the input images which should ideally result in output images that reflect the controlled disruption (here: represent a mirrored image). A degradation in performance or significant uncertainty in the corresponding heatmaps serves as a validation that the further neural network (e.g., the VAE) appropriately flags unreliable regions.

In some examples, the uncertainty maps produced by the further neural network are compared against pre-expansion and post-expansion image pairs that were not part of the training set and that were obtained empirically, i.e., by capturing images of the biological sample before and after its expansion. This step ensures that areas of high uncertainty in the generated ExM images correspond to regions where registration is challenging or where morphological distortions are known to occur. The findings from the uncertainty maps and correlative validation are used in some examples to adjust the training parameters (e.g., learning rate, noise adaptation standard deviation) or retrain the model. The process may iterate until the uncertainty maps consistently indicate high confidence in areas that are experimentally verified. The iteration may be performed automatically or semi-automatically, thereby providing a workflow that automatically improves the accuracy of the trained model.

In the application phase, when the trained model is applied on new living cell images, the further neural network (e.g., the VAE module) may continue to generate uncertainty heatmaps alongside the output ExM images. These heatmaps facilitate a real-time assessment that can guide further analysis, such as flagging regions for manual review, thereby ensuring that the model's outputs are robust for downstream applications.

This workflow may ensure that the reliability of the trained model is continuously evaluated both during training and in real-time testing, ultimately leading to higher confidence in the restored high-resolution images.

Figures 2 and 4 illustrate a method and system for using a trained model, e.g., a model generated in accordance with a method illustrated in figure 1, for living cell microscopy. The application of the already trained model on new data may also be referred to as "test phase" or "application phase".

In the test phase, living cell microscopy, e.g., two-photon microscopy or another microscopy technology, is used to acquire further NExM images from living tissue. These images are similar to the virtual, lower-resolution NExM images synthetically generated in the training phase. The computer system 400 shown in figure 4 may comprise one or more processors 302 and a volatile or non-volatile storage medium 303 comprising computer-interpretable instructions which, when executed by the processors cause the processors to execute a method of applying a trained model 310 on a new NExM image. For example, this method may be the method described with reference to figure 2 in the following.

In a first step 201, the trained machine-learning model 310 is provided. For example, the model may be deployed, instantiated, and/or started. The trained model is adapted to receive a NExM image depicting a biological living cell sample, and in response to output an ExM image depicting a virtual expanded ex vivo version of the biological living cell sample, wherein the NExM image has a resolution that is lower than that of the ExM image. Typically, the trained model 310 is used and/or executed on a computer system 400 that is not identical to the computer system 300 on which it was trained. However, in some examples, the computer systems 300, 400 used in the training and test phase may be identical.

Next in step 202, the computer system or processor executing the trained model 310 receives a further NExM image 404 of a further biological living cell sample. "Further" in this context may mean that this further image was not part of the training data set. For example, the NExM image 404 may be an image received in real time from an living cell microscopy system 408. The image may be received as part of a microscopy image stream or video stream.

Next in step 204, the trained model 310 is applied on the further NExM image to generate an ExM image 406 depicting a virtual, expanded ex vivo version of the further biological living cell sample. The acquired NExM image 404 depicting the biological living cell sample 412 is fed into the already trained machine-learning model 310. The model processes this image by generating its super-resolved ExM image equivalent 406 based on the transformational mapping learned in the training phase. In this step, the trained model converts the low-resolution NExM image 404 into a high-resolution ExM image 406. The further ExM image 406 exhibits enhanced resolution and improved visualization of subcellular details not visible or less visible in the originally received image 404.

Finally, the generated ExM image 408 is output. For example, it may be output via an output interface 410 to another application program or computer and/or to a user via a graphical user interface, making it available for subsequent analysis by a user or an application program.

According to some examples, the method illustrated in figure 2, i.e., the use of the trained model in the test phase for converting NExM living cell images into virtual ExM images, is performed continuously on a stream of NExM images. The trained model is continuously applied to each frame of the stream, generating an ongoing sequence of high-resolution ExM images 406. This scenario may even be performed in real-time. Real-time processing may allow performing dynamic studies where rapid changes within live tissue must be captured and analyzed.

The inventors have applied and tested the trained model in various example settings:

### Glioblastoma Example:

The model was trained on a training data set generated from real ExM glioblastoma images using U-Net architecture as the CNN and by applying Gaussian noise as described above. The resulting model was applied to living cell two-photon microscopy living cell glioblastoma NExM images.

Glioblastoma is a primary brain tumor characterized by invasion and whole-brain colonization.

Patient-derived glioblastoma spheroid models from resected tumor material were cultivated in DMEM/F-12 under serum-free, non-adherent, 'stem-like' conditions, which includes B27 supplement without Vitamin A, insulin, heparin, epidermal growth factor, and fibroblast growth factor as described before. Membrane-bound GFP expression was achieved with the pLego-T2-mGFP construct. Transduced cells were sorted regularly by FACS with either FACSAria Fusion 2 Bernhard Shoor or FACSAria Fusion 1 Richard Sweet (BD Biosciences). The 530/30 filter for mGFP was used for the respective fluorophores: The Illumina Infinium Methylation EPIC kit was used to obtain the DNA methylation status at >850,000 CpG sites in patient-derived glioblastoma spheroid models, according to the manufacturer's instructions at the Genomics and Proteomics Core Facility of the German Cancer Research Center in Heidelberg, Germany. Prior to living cell two-photon imaging, surgical procedures were performed to obtain brain tumor tissue samples. Cranial window implantation in mice was done, whereby a custom-made teflon ring for painless head fixation was used during imaging. 1 to 3 weeks after cranial window implantation, 50.000-100.000 glioblastoma cells were stereotactically injected into the mouse cortex at an approximate depth of 500 µm. For ex vivo analyses of tissue, mice were sacrificed via perfusion. The tumors were observed from 1 week after tumor implantation in cranial window bearing mice with a Zeiss 7MP or Zeiss LSM980 NLO setup equipped with bandpass filter sets of 500 - 550 nm and 575 - 610 nm, using a 20x (1.0 NA) apochromatic, 1.7 mm working distance, water immersion objective (Zeiss). A pulsed Ti:Sapphire laser (Chameleon Discovery NX; Coherent) was used at 960 nm wavelength. Isoflurane gas was diluted in 100 % O2 to a concentration between 0.5 - 4.0% depending on the experiment. For the induction of anesthesia, the mouse was exposed to 3-5% isoflurane, which was lowered to 0.5-3% depending on the experiment for anesthesia maintenance and monitored based on the breathing rate of the mice. Eye cream was applied to the mice after anesthesia induction. During imaging, the body temperature of the mice was monitored and kept at 37 C using a temperature sensor and a heating plate. Anesthesia was regularly evaluated during image acquisition by checking postures and breathing rates.

In order to analyze tumor cell dynamics over days, TRITC-dextran (fluorescent conjugated tetramethylrhodamine isothiocyanate-dextran, 500.000 g/mol) was dissolved in 0.9% NaCl-solution at 10 mg/ml. Before conducting the living cell imaging, 100 ml of TRITC solution was injected into the lateral tail vein under isoflurane anesthesia for blood vessel visualization. Regions of interest were imaged approximately every 12h for up to 1 week with a lateral resolution of 0.59 µm/pixel and an axial resolution of 1 µm/pixel. The acquired living cell images were hyperstacked and registered using a custom ImageJ script.

The ExM images generated by the trained model demonstrated significant enhancements in both image quality and spatial resolution. It was possible to investigate tumor cell invasion with unprecedented spatial resolution. Applying the trained model on previously acquired living cell time-lapse imaging, it was possible to track filamentous membrane protrusions near the diffraction limit of light over time in vivo. These structures demonstrated a highly dynamic turnover, indicating a subcellular scanning behavior of brain tumor cells and revealing invasion mechanisms on a nanoscopic scale. Using correlative validation of the trained model, it was possible to confirm that these structures can be confidently characterized using living cell two-photon microscopy. Here, the trained model improved the semi-automatic tracing of tumor microtube branches and small processes. Further, the images generated by the trained model allowed improved detection of brain tumor cell neurite-like protrusions and high-fidelity semi-automatic tracing of brain tumor cells outperforming conventional living cell two-photon imaging. The images generated by the trained model were analyzed in downstream analysis such as automated or semi-automated tracing of organelles or other structures, quantification of false-positives/negatives in object detection, interrater variability and/or analysis of process dynamics (12h Data). In addition, it allowed comparing a control group vs a therapy group over 3-4 days.

The restored living cell two-photon microscopy ExM images output by the model revealed previously unresolved cellular structures such as tumor microtubes (TMs) and small filamentous membrane processes. Enhanced resolution allowed for detailed tracking of tumor cell invasion dynamics. This example demonstrates that by using the trained model, dynamic tumor cell morphology and fine processes may be visualized, which were otherwise obscured due to the diffraction limit.

### Dendritic Spine Dynamics Example:

In a second example, the trained model was applied on NExM images of dendritic spines to generate ExM image versions thereof.

To visualize tumor-connected neurons, rabies-based retrograde tracing was utilized as described in Tetzlaff, Reyhan 2024: "Characterizing and targeting glioblastoma neuron-tumor networks with retrograde tracing", bioRxiv 2024.03.18.585565; doi: https://doi.org/10.1101/2024.03.18.585565, published in Cell doi: 10.1016/j.cell.2024.11.002. Briefly, glioblastoma cells expressing a TVA-oG-receptor and the N2c rabies virus strain were injected cortically into the brains of cranial window bearing mice. Time-lapse imaging of dendritic stretches of tumor-connected neurons was performed every two days for six days total with a lateral resolution of 0.10 µm/pixel and an axial resolution of 0.32 µm/pixel. Analysis of time-lapse imaging of dendritic plasticity in tumor-connected neurons was performed manually. After registration of each stack to minimize drift between acquisition time-points using a custom ImageJ script, regions of interest of dendritic stretches were cropped for further analysis.

The output images were utilized to monitor dendritic spine plasticity in tumor-connected neurons. The enhanced resolution provided by the ExM images output by the trained model enabled more accurate tracing and classification of dendritic spines compared to conventional two-photon microscopy imaging. Hence, the use of a model trained as described herein and its use for the restoration of fine structural details in neuronal processes may allow for more precise studies of synaptic connections and plasticity.

### Mitochondrial Dynamics Tracking Example:

A further example involves training a model on an image pair training data set generated from brain tumor ExM images, in which the tumor cells express mitochondrial GFP.

For ex vivo analyses of PDX models, the mice were anesthetized with ketamine/xylazine (150mg/kg body weight (BW) and 20mg/kg BW respectively) via intraperitoneal injection. Mice were perfused in general transcardially with PBS followed by 4% PFA (w/v) in 1x PBS. Mice used for correlative imaging experiments were perfused with PBS followed by 4% PFA (w/v) and 20% acrylamide (w/v) in 1x PBS. The brain was removed and post-fixed in 4% PFA overnight and kept in PBS at 4°C. Serial sections of 80-100 µm were cut with a semiautomatic vibratome (Leica VT1000s). For in vitro analyses, coverslips were washed once with 1x PBS and subsequently fixed with 4% PFA (w/v) in 1x PBS for 10 minutes. Afterwards, they were washed once with 1x PBS and stored in PBS at 4°C.

Ex vivo mouse brain slices were first permeabilized with 1% (v/v) Triton X-100 and 5% (v/v) FBS in 1x PBS for 2 hours. Primary antibodies were solved in 1% (v/v) FBS and 0.2% (v/v) Triton X-100 in 1x PBS. Afterwards, the slices were washed 3x with 2% (v/v) FBS in 1x PBS for 15 minutes each. The secondary antibodies were solved in the same buffer as the primary antibodies with a general dilution of 1:500. The primary and the secondary antibodies were both incubated for 20-24 hours each. After secondary antibody incubation, slices were washed 3x with 1% (v/v) FBS in PBS for 10 minutes each, followed by 3x washing steps with 1x PBS for 10 minutes each. All incubation steps were performed at room temperature on a shaker.

For in vitro stainings, coverslips were permeabilized for 10 minutes with 0.2% (v/v) Triton X-100 in 1x PBS and blocked with 10% FBS (v/v) in 1x PBS for 10 minutes. In general, the primary antibodies were solved in blocking buffer with a dilution according to the manufacturer and incubated for 1h. Subsequently, coverslips were washed 2x with 1x PBS for 5 minutes each before the respective secondary antibody was applied with a general dilution of 1:500 in blocking buffer. After another hour of incubation, the coverslips were washed again 2x with 1x PBS for 5 minutes each. All incubation steps were performed at room temperature, shaking.

The trained model was used to convert two-photon NExM images of cancerous brain tissue into ExM images with higher resolution to capture mitochondrial dynamics in live tumor cells. The super-resolved images produced by the trained model enabled detailed tracking of organelle movements and interactions within the cellular environment. This enhanced visualization was used for improved understanding of cellular energetics and the role of mitochondria in tumor progression.

All of the above-mentioned examples, as well as additional examples, can be applied to in vitro live-cell imaging by generating the ExM images from expanded biological in vitro samples, e.g. co-cultures of neurons and glioblastoma cells.

### Real Time Application Example:

The above-mentioned trained models were used in various real-time applications where the system continuously processed a stream of two-photon NExM images depicting tissues of various types. The models' ability to operate in real time enabled live, high-throughput imaging, facilitating immediate observation and quantitative analysis of dynamic biological processes, in particular rapid cellular events. The real-time application may be particularly useful for potential clinical applications, both for diagnostic purposes and for treatment planning and optimization, where immediate results are necessary, because no sample preparation operations such as staining, washing, expanding a tissue are necessary.

These examples collectively demonstrate that in the test phase the trained models may allow to convert low-resolution, living cell images into enhanced high-resolution outputs. The models may be integrated in a streamlined, real-time application for use as a helpful tool in basic research and various medical and clinical applications such as rapid in vivo diagnostics and/or treatment planning and optimization.

In order to generate the trained models which were respectively used in the different examples, the Gaussian noise was introduced into the virtual NExM images used as part of the training data set. The artificial noise was added with the following standard deviations (sigma) values of the added artificial Gaussian noise: 1400 for glioblastoma cell dynamics, and 700 for dendritic spine dynamics. The images were upscaled four times again to match the dimensions of the living cell images to be input into the trained model and the corresponding dimensions of the ExM images used for creating the training data set. These values are chosen to match the noise characteristics observed in real living cell non-expansion microscopy images.

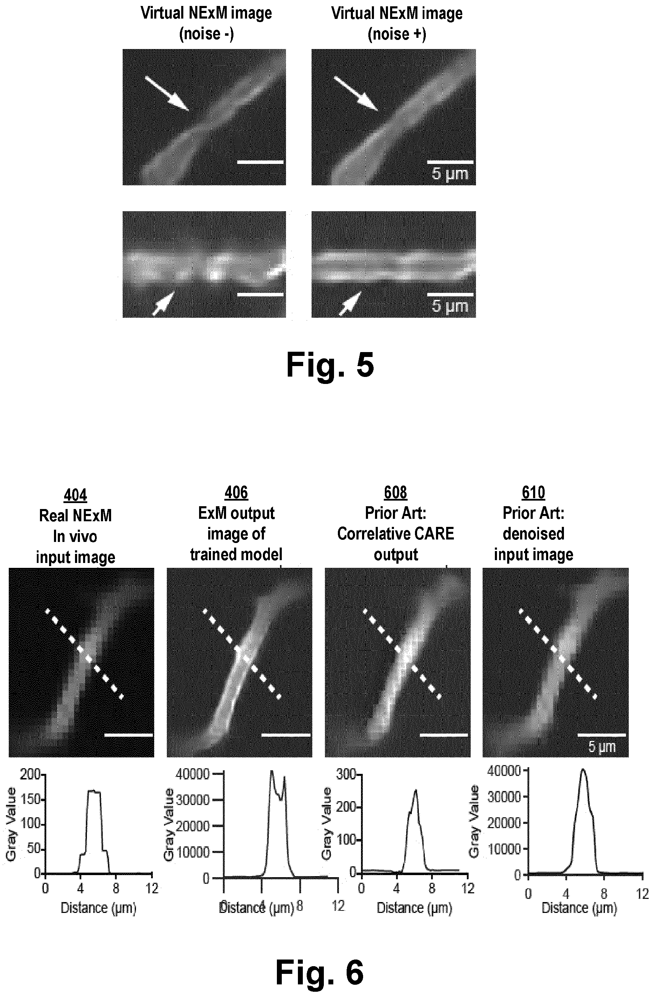

Figure 5 shows the effect of applying a Gaussian noise function on the downscaled virtual NExM images. The noise smoothens and blurs the contours of various structures, thereby mimicking the now resolution and limited quality of living cell images (compared to images using the same imaging technology on expanded pictures). The two images at the left show the downscaled NExM images before the Gaussian noise function is applied, the two images at the right show the same images after the noise function was applied.

Figure 6 shows a comparison of the quality and resolution of the images obtainable via a trained model created according to embodiments of the invention with other image restoration methodologies. All figures show a region of two membranes of a tumor microtube derived from a glioma. Image 404 is the real NExM living cell image acquired from an living cell sample using two-photon microscopy. Image 406 is the output image computed by a trained model 310 described herein for embodiments or examples of the invention. The two membranes defining the microtube are clearly visible as bright lines. Image 608 is an image computationally created from image 404 using a state of the art approach known as "correlative CARE". The contours are blurry and no clean lines/no membranes are visible. Image 610 is an image computationally created from the input image 404 by applying a standard denoising filter on the input image. The image quality of image 610 is even worse than that of image 608.

The line plots below the respective images illustrate the grey values observed along the dotted line. Also the line plot of image 406 shows two clearly discernable intensity peaks being indicative of the two membranes, while the plots of the other images 608, 610 are not able to resolve two separate peaks.

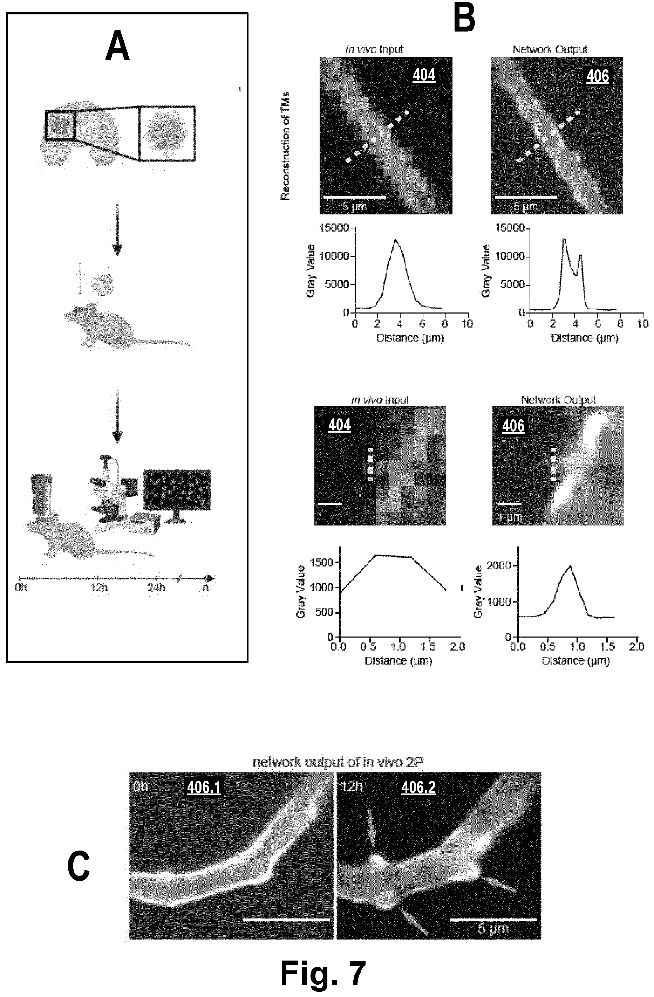

Figures 7 A-C illustrate various aspects of a workflow for using digital expansion microscopy according to examples described herein for living cell characterization of glioma cells.

Figure 7A illustrates the workflow for preparing a biological sample for living cell two-photon microscopy: In a first step, glioblastoma stem cell lines are obtained from a patient. More particularly, a PDX cell line, short for patient-derived xenograft cell line, is established by taking tumor tissue directly from a patient and implanting it into an immunodeficient animal-often a mouse-to allow the tumor to grow in an living cell environment. This approach preserves many of the histological and genetic characteristics of the original tumor, making the cell line more representative of human disease compared to conventional established cell lines. Preferably, the PDX cell line is a mGFP-expressing PDX cell line. A mGFP-expressing PDX cell line is a patient-derived xenograft cell line that has been genetically engineered to express green fluorescent protein (GFP) in the membrane. The introduction of mGFP into the cells enables real-time visualization and tracking of the tumor cells using fluorescence imaging techniques. This is particularly useful in applications such as living cell imaging studies and tumor cell tracing, as mGFP expression allows users to monitor cellular processes, tumor spread, and the efficacy of therapeutic interventions with high sensitivity and specificity. Such cell lines enable dynamic studies that provide insights into tumor behavior and treatment responses in a living organism.

The mGFP-expressing PDX cell line is implanted into the mouse typically into the tissue of interest (for example, the brain in this case). The mGFP gene causes these tumor cells to produce green fluorescent protein in their membrane, which emits light at a characteristic wavelength when excited by the appropriate light source.

In two-photon microscopy, pulsed infrared lasers are used to achieve two-photon excitation. The long-wavelength infrared light penetrates more deeply into the tissue while reducing phototoxicity and photobleaching compared to conventional fluorescence microscopy. Because two photons are required to excite GFP simultaneously, excitation is highly localized to the focal point of the laser, ensuring that only the target cells are illuminated.

The emitted fluorescence from GFP (typically in the green range) is then captured by sensitive detectors. This fluorescent signal corresponds specifically to the mGFP-expressing tumor cells, allowing researchers to visualize the location, morphology, and dynamics of these cells within the surrounding tissue.

For longitudinal studies or real-time monitoring, a cranial window (or another suitable imaging access method) is often installed in the mouse model. This window provides direct optical access to the area where the tumor cells are located, making it easier to conduct repeated imaging sessions over time. As a result, users can track tumor growth, cell migration, and interactions with the surrounding microenvironment continuously.

Figure 7B illustrates two image pairs and respective grey value intensity plots: the images 404 are living cell two photon microscopy NExM images depicting brain tissue of the mouse model. These images 404 are provided as input to a trained machine learning model 310 which was trained on a training data set 308 comprising real ExM images and computationally obtained virtual NExM images. The trained model outputs images 406, which correspond to computationally created ExM images depicting the same parts of the biological sample as the input images 404, but with higher resolution/image quality. As can be inferred from the upper image pair, the plot below the upper output image 406 shows two intensity peaks, while the plot below the upper input image shows only one intensity peak. Similarly, the peak below the lower output image 406 is much sharper than the peak of the plot below the lower input image, which illustrates improved resolution of the output image 406.

Figure 7C shows a comparison of an image 406.1 output by the trained model upon inputting an living cell two-photon input image 404.1 of a microtube structure at a first time point t1=0, and of a further output image 406.2 output by the trained model upon inputting an a further living cell two-photon input image 404.2 of the same microtube structure at a second time point t2 12 hours later than t1. The super-resolved images 406.1, 406.2 allow to reveal the dynamics of finer subcellular structures, in this case the formation of small protrusions as indicated by the arrows.

In vivo glioblastoma imaging has demonstrated that machine learning models trained on a training set comprising ExM and virtual NExM image pairs may enable the resolution of filamentous membrane protrusions and tumor microtubes at near-diffraction-limit dimensions. The inventors have observed that time-lapse two-photon microscopy experiments have shown that the technique may enable semi-automatic tracing and quantification of tumor microtube branches and neurite-like protrusions.

The technique has further been validated in tracking mitochondrial dynamics in live tumor cells. The super-resolved images produced by the trained model may allow for detailed visualization and quantitative analysis of organelle movements and interactions, offering significant insights into cellular energetics and tumor cell states.

While the invention has been illustrated and described in detail in the drawings and foregoing description, such illustration and description are to be considered illustrative or exemplary and not restrictive; the invention is not limited to the disclosed examples.

An "image analysis system" as used herein is a computing system comprising one or more processors configured to process, analyze, transform, and/or output image data. Optionally, the image analysis system may be operatively coupled to one or more image acquisition devices, e.g., a microscope. An image analysis system may also be an integral part of an image acquisition device, e.g., a microscope.

A "processor" as used herein may refer to any hardware device or computational unit capable of executing software instructions to perform one or more data processing operations, for example, data processing operations related to image processing, data transformation, or machine learning.

The term "Expansion microscopy (ExM) image" as used herein is a digital image acquired from a biological ex vivo sample that has been physically expanded using a tissue expansion protocol, typically providing enhanced spatial resolution compared to unexpanded tissue.

The term "non-expansion microscopy (NExM) image" as used herein is a digital image of a biological sample in its non-expanded state. Typically, a NExM image is obtained by capturing an image of the non-expanded biological sample. For example, a living cell image acquisition technique may be used. In case the NExM image is not obtained via capturing an image of a real biological sample, but rather is generated computationally from another image, this NExM image may also be referred to as virtual NExM image.

The term "virtual non-expansion microscopy (NExM) image" as used herein refers to a computationally generated image simulating the resolution and noise characteristics of a living cell microscopy image depicting a biological sample in its original, non-expanded state. For example, a virtual NExM image may be derived from a higher-resolution ExM image.

A "training data set" as used herein refers to a collection of image pairs used to train a machine-learning model, wherein each pair includes an ExM image and its corresponding virtual NExM image.

A "machine-learning model" as used herein refers to a computer-based algorithm or architecture, such as a neural network, configured to learn a mapping between input data and output data based on training data.

A "trained model" as used herein is a machine-learning model that has been created (trained) and/or optimized (e.g., re-trained) on a training data set. The trained model may in particular be capable of performing image transformations on new input data.

A "further NExM image" provided as input to the already trained model as used herein may in particular be a NExM image that was not part of the training set, typically acquired from a biological living cell sample using living cell microscopy. The ExM image output by the trained model according to examples will depict a high-resolution, virtual expanded version of the biological structure captured in the further NExM image.

An "interface" as used herein is a hardware and/or software component of the system that facilitates the input, output, display, transmission, and/or further processing of data, e.g. image data, sent to or received via the interface. Examples of an interface for receiving image data may include a system bus for reading data from a storage medium, a network interface for receiving data from a network, in particular other computers, or an interface to an image acquisition system for receiving individual microscopy images or an image stream.

The expression "living cell light microscopy imaging" as used herein refers to the process of visualizing structures and processes within living biological tissues in the body of a living organism ("in vivo") or living cell samples or cultures ("in vitro") using optical microscopy techniques, such as two-photon microscopy. Hence, living cell light microscopy imaging may encompass in vivo light microscopy imaging in a living organism and in vitro light microscopy imaging of living biological samples.

The expression "Deep learning model" as used herein refers to a type of machine-learning model based on neural networks with multiple layers, typically capable of capturing complex patterns and high-dimensional data.

A "convolutional neural network (CNN)" as used herein refers to a specific architecture of deep learning models especially suited for image data, using convolutional layers to extract hierarchical spatial features.

A "Variational Autoencoder (VAE)" as used herein is a type of neural network model that encodes input data into a probabilistic latent space and is configured to output reconstructed data. The reconstructed data can be used, for example, for assessing the reliability of generated ExM images.

The expression "resolution reduction" as used herein refers to a process of intentionally reducing the spatial resolution of an image, for example by downsampling, to simulate imaging conditions found in lower-resolution living cell microscopy.

A "noise pattern" as used herein refers to an artificial or modeled image distortion, such as Gaussian noise, introduced to simulate real-world imaging artifacts and conditions.

The expression "Gaussian noise" as used herein refers to a random noise with a Gaussian distribution of pixel intensities, characterized by its standard deviation, used to mimic the stochastic variation seen in images of biological samples acquired with a given image acquisition technology.

The expression "real-time processing" as used herein refers to a mode of operation in which input image data is processed by the system and corresponding output images are generated with minimal delay, enabling immediate visualization.

The expression "Heatmap (of reliability)" as used herein refers to a graphical image representation, e.g., an image overlay, that encodes and visualizes the degree of confidence or reliability of regions in a generated ExM image, often produced by a VAE or similar model.

A "patient-derived xenograft (PDX) cell line" as used herein refers to a biological cell line derived from patient tumor tissue that is implanted and grown in a host animal, typically a mouse, used for modeling human cancer. mGFP-expressing PDX cell lines are PDX cell lines genetically engineered to express membrane-bound green fluorescent protein (mGFP), enabling fluorescent visualization of the cells under microscopy.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Generally, the program instructions can be executed on one processor or on several processors. In the case of multiple processors, they can be distributed over several different entities like clients, servers etc. Each processor could execute a portion of the instructions intended for that entity. Thus, when referring to a system or process involving multiple entities, the computer program or program instructions are understood to be adapted to be executed by a processor associated or related to the respective entity.

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

### REFERENCE SIGNS LIST

- 102: receiving expansion microscopy (ExM) images
- 104: computationally converting ExM images into virtual NExM images
- 106: creating a training data set
- 108: training a machine-learning model
- 110: outputting the trained model
- 114: outputting the generated ExM image
- 201: providing a trained machine-learning model
- 202: receiving a further NExM image
- 204: applying the trained model on the further NExM image
- 206: outputting the generated ExM image
- 300: image analysis system (training phase)
- 302: processor
- 303: storage medium
- 304: ExM image
- 306: virtual NExM image
- 308: training data set
- 310: trained machine-learning model
- 400: image analysis system (test/application phase)
- 404: further NExM image
- 406: further ExM image
- 408: image acquisition system
- 410: output interface
- 412: biological living cell sample
- 608: comparative virtual ExM image from correlative CARE
- 610: comparative virtual ExM image from standard denoising
- 404.1: NExM image input at timepoint t1
- 406.1: ExM image output at timepoint t1
- 404.2: NExM image input at timepoint t2
- 406.2: ExM image output at timepoint t2

## Claims

1. An image analysis system (300, 400) for living cell light microscopy imaging comprising:
- at least one processor(302) configured for:
• receiving (102) expansion microscopy, ExM, images (304) acquired from expanded biological ex vivo samples;
• computationally converting (104) the received ExM images into virtual non-expansion microscopy, NExM, images (306) depicting virtual living cell versions of the expanded ex vivo samples, wherein the virtual NExM images have a resolution that is lower than that of the ExM images;
• creating (106) a training data set (308) comprising image pairs, each pair including one of the ExM images and the respectively converted virtual NExM image;
• training (108) a machine-learning model using the image pairs so that the model learns to transform a NExM image depicting a biological living cell sample into an ExM image depicting a virtual expanded ex vivo version of the biological living cell sample;
• receiving (110) a further NExM image (404) of a further biological living cell sample;
• applying (112) the trained model (310) on the further NExM image to generate an ExM image (406) depicting a virtual, expanded ex vivo version of the further biological living cell sample; and
- an interface (410) configured for outputting (114) the generated ExM image for use in living cell light microscopy imaging.

2. An image analysis method for living cell light microscopy imaging, comprising:
- providing (201) a trained machine-learning model (310), the trained model being adapted to receive a NExM image depicting a biological living cell sample, and in response to output an ExM image depicting a virtual expanded ex vivo version of the biological living cell sample, wherein the NExM image has a resolution that is lower than that of the ExM image;
- receiving (202) a further NExM image (404) of a further biological living cell sample;
- applying (204) the trained model on the further NExM image to generate an ExM image (406) depicting a virtual, expanded ex vivo version of the further biological living cell sample; and
- outputting (206) the generated ExM image (406).

3. The image analysis method of claim 2, wherein the machine-learning model is a deep learning model, in particular a deep learning model comprising a neural network, in particular a convolutional neural network, CNN.

4. The image analysis method of any one of claims 2 or 3, further comprising:
- assessing the reliability of the properties of the generated ExM image using a neural network, in particular, a Variational Autoencoder, VAE; and
- outputting an indication of the assessed reliability, in particular in the form of a heatmap of the ExM image generated by the trained model, the heatmap encoding the assessed reliability.

5. The image analysis method of any one of the previous claims 2-4, further comprising training an untrained model to provide the trained model, wherein the training is performed on a training data set comprising pairs of ExM images and NExM images, the ExM images of the training data set having been acquired from expanded biological ex vivo samples, wherein the NExM image of each image pair is a virtual image being the result of a computational conversion of the ExM image of the image pair into the NExM image.

6. The image analysis method of claim 5, wherein the conversion comprises reducing the resolution, in particular by at least a 2-fold reduction, and more particularly within a range of a 2-fold to 20-fold reduction.

7. The image analysis method of claim 5 or 6, the conversion comprising introducing noise patterns mimicking living cell imaging conditions and/or artifacts, wherein in particular the noise pattern mimicking the living cell imaging conditions comprises a Gaussian noise with a standard deviation determined empirically to best match empirically acquired living cell NExM images, or comprises a noise profile generated by modeling the noise profile of the microscope used for acquiring the living cell NExM images.

8. The image analysis method of any one of claims 5-7, wherein the NExM images of the image pairs are images selected from a group comprising:
- two-photon-microscopy images; or
- single-photon-microscopy images; or
- three-photon-microscopy images; or
- Light-Sheet Fluorescence Microscopy (LSFM) images; or
- Confocal Laser Scanning Microscopy (CLSM).

9. The image analysis method of any one of the previous claims 2-8,
- wherein the received further NExM image is an image acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM); and
- wherein the ExM image generated by the trained model is a virtual image computationally reproducing an image acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM).

10. The image analysis method of any one of the previous claims 5-9,
- wherein the ExM images of the image pairs are images acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM); and
- wherein the NExM images of the image pairs are images computationally reproducing an image acquired by an image acquisition technique selected from a group comprising: two-photon-microscopy, single-photon-microscopy, three-photon-microscopy, Light-Sheet Fluorescence Microscopy (LSFM), and Confocal Laser Scanning Microscopy (CLSM).

11. The image analysis method of any one of the previous claims 2-10, wherein the NExM images used for training the model and/or the received further NExM image have a spatial resolution of approximately 0.1 µm to 1.0 µm in the lateral and axial dimensions.

12. The image analysis method of any one of the previous claims 2-11,
- wherein the receiving of the further NExM image of the further biological living cell sample comprises receiving a stream of continuously acquired NExM images of the further biological living cell sample;
- wherein the trained model is continuously applied on the stream of the NExM images to generate a stream of ExM images of the further biological sample in real-time; and
- wherein the outputting of the virtual ExM image comprises outputting the stream of virtual ExM images in real-time.

13. An image analysis method for living cell light microscopy imaging, comprising:
- receiving (102) expansion microscopy, ExM, images (304) acquired from expanded biological ex vivo samples;
- computationally converting (104) the received ExM images into virtual non-expansion microscopy, NExM, images (306) depicting virtual living cell versions of the expanded ex vivo samples, wherein the virtual NExM images have a resolution that is lower than that of the ExM images;
- creating (106) a training data set (308) comprising image pairs, each pair including one of the ExM images and the respectively converted virtual NExM image;
- training (108) a machine-learning model using the image pairs so that the model learns to transform a NExM image depicting a biological living cell sample into a ExM image depicting a virtual expanded ex vivo version of the biological living cell sample;
- outputting (110) the trained model (310) for use in living cell light microscopy imaging.

14. A method for providing a trained image conversion model for use in living cell light microscopy imaging, the method comprising:
- applying a tissue expansion protocol on one or more biological ex vivo samples; and applying a staining protocol on the biological ex vivo samples,
- receiving expansion microscopy, ExM, images depicting the one or more expanded biological ex vivo samples;
- performing the method according to claim 13 for providing the trained model, whereby the received ExM images are used for providing the training data set.

15. An image analysis system (400) for living cell light microscopy imaging, comprising:
- at least one processor (302) configured for:
o providing (201) a trained machine-learning model (310), the trained model being adapted to receive a NExM image depicting a biological living cell sample, and in response to output an ExM image depicting a virtual expanded ex vivo version of the biological living cell sample, wherein the NExM image has a resolution that is lower than that of the ExM image;
o receiving (202) a further NExM image (404) of a further biological living cell sample (412);
o applying (204) the trained model on the further NExM image to generate an ExM image (406) depicting a virtual, expanded ex vivo version of the further biological living cell sample; and
- an interface configured for outputting (206) the generated ExM image for use in living cell light microscopy imaging.
